# EUROPÄISCHE PATENTANMELDUNG

(11) **EP 0 896 413 A2**
(43) Veröffentlichungstag der Anmeldung: **10.02.1999**
(21) Anmeldenummer: 98114193.0
(22) Anmeldetag: 29.07.1998
(51) Int. Cl.: H02J 1/00

(54) **Elektrische Schaltungsanordnung**

(30) Priorität: 31.07.1997 DE 19733019
(71) Anmelder: Leopold Kostal GmbH & Co. KG, 58507 Lüdenscheid (DE)
(72) Erfinder: Holger, Lenhard, 44379 Dortmund (DE)

(57) **Zusammenfassung**

Es wird eine elektrische Schaltungsanordnung für mehrere, vorzugsweise in einem Kraftfahrzeug angeordnete, über jeweils eine verbrauchernahe Schaltvorrichtung ein- und ausschaltbare, einerseits direkt an einem Pol einer Gleichspannungsversorgung angeschlossene elektrische Verbraucher vorgeschlagen, wobei zwecks Einsparung von Verbindungsleitungen jeder Verbraucher zusammen mit seiner verbrauchernahen Schaltvorrichtung lediglich über eine elektrische Verbindungsleitung an einer eine Leistungsstufe und eine Steuerstufe aufweisenden Elektronikeinheit angeschlossen ist und eine Schaltzustandsänderung einer Schaltvorrichtung von der Steuerstufe über ihren mit der Leistungsstufe verbunden Überwachungseingang erfaßt und über ihren ebenfalls mit der Leistungsstufe verbundenen Steuerausgang zur Umschaltung des zugehörigen Leistungstreibers herangezogen ist.

## Beschreibung

Die vorliegende Erfindung geht von einer elektrischen Schaltungsanordnung aus, die mehrere jeweils mit ihrem einen Anschluß direkt an einem Pol einer Gleichspannungsversorgung liegende Verbraucher aufweist, deren jeweils anderer Anschluß mit einer entfernt angeordneten, sowohl eine Leistungsstufe, als auch eine Steuerstufe aufweisenden Elektronikeinheit verbunden ist und die jeweils über eine verbrauchernahe Schaltvorrichtung ein- und ausschaltbar sind.

Derartige Schaltungsanordnungen sind in einem Kraftfahrzeug unter anderem dafür vorgesehen, um die in der Fahrgastzelle verteilt vorhandenen, einer Innenraumbeleuchtung zugehörigen, als elektrische Verbraucher anzusehenden Leuchten individuell ein- und auszuschalten.

In diesem Zusammenhang war es bisher üblich, den jeweils einen elektrischen Anschluß dieser Leuchten direkt mit dem einen Pol der Gleichspannungsversorgung, d.h. dem Bordnetz zu verbinden und den anderen Pol einerseits über eine eine sogenannte verbrauchernahe Schaltvorrichtung aufweisende Verbindungsleitung an den anderen Anschluß zu legen. Andererseits sind zumindest einige der Leuchten auch jeweils über eine oder mehrere sogenannte verbraucherferne Schaltvorrichtungen ein- und ausschaltbar, wofür an dem jeweils anderen Anschluß noch jeweils eine solchen Schaltvorrichtungen zugeordnete Verbindungsleitung angeschlossen ist.

Darüber hinaus ist es allgemein bekannt, den der Innenraumbeleuchtung eines Kraftfahrzeugs zugehörigen Leuchten eine entfernt angeordnete Elektronikeinheit zuzuordnen, wobei die Leuchten mit ihrem einen Anschluß einerseits direkt mit dem einen (positiven) Pol der Gleichspannungsversorgung verbunden und andererseits über eine als sogenannter Schließer ausgebildete Schaltvorrichtung an einer die Schaltstellung derselben erkennenden Eingangsstufe der Elektronikeinheit angeschlossen sind. Mit jeweils ihrem anderen Anschluß sind die Leuchten an einer für jede Leuchte einen Leistungstreiber aufweisenden Leistungsstufe angeschlossen. Mit der Leistungsstufe, als auch mit der Eingangsstufe ist eine aus einem Mikrocomputer bestehende Steuerstufe verbunden, wobei die Steuerstufe neben der normalerweise initiierten Ein- und Ausschaltung der Leuchten auch eine Diagnose der Leuchtenstromkreise vornimmt und eine davon abhängige Reaktion durchführt. Problematisch bei dieser Ausführungsform ist die relativ hohe Anzahl von Verbindungsleitungen zwischen den Verbrauchern und der Elektronikeinheit, als auch die relativ hohe Anzahl von elektrischen Verbindungen in der Elektronikeinheit selbst, sowie die erforderliche Eingangsbeschaltung und zwar, weil dadurch die Störanfälligkeit vergrößert wird.

Der vorliegenden Erfindung liegt die Aufgabe zugrunde, eine elektrische Schaltungsanordnung der eingangs erwähnten Art derart weiterzubilden, daß mit wesentlich geringerem Aufwand eine gleiche Funktionalität zu gewährleisten ist.

Erfindungsgemäß wird die Aufgabe im wesentlichen dadurch gelöst, daß jeder Verbraucher zusammen mit seiner verbrauchernahen Schaltvorrichtung lediglich über eine elektrische Verbindungsleitung an der Elektronikeinheit angeschlossen ist und eine Schaltzustandsänderung einer Schaltvorrichtung von der Steuerstufe über ihren mit der Leistungsstufe verbundenen Überwachungseingang erfaßt und über ihren ebenfalls mit der Leistungsstufe verbundenen Steuerausgang zur Umschaltung des zugehörigen Leistungstreibers herangezogen ist.
Vorteilhaft bei einem derartigen Aufbau ist, daß insbesondere die für die elektrische Verbindung zwischen den an exponierter Stelle des Kraftfahrzeugs vorhandenen Verbrauchern und der zentralen Elektronikeinheit benötigten Verbindungsleitungen auf die halbe Anzahl reduzierbar sind, wodurch die Störanfälligkeit der Schaltungsanordnung deutlich verringert ist.

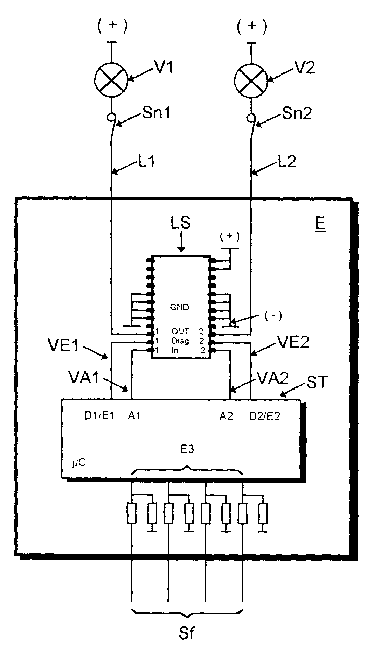

Weitere besonders günstige Ausgestaltungen des erfindungsgemäßen Gegenstandes sind in den Unteransprüchen angegeben und werden anhand eines in der Zeichnung dargestellten Ausführungsbeispieles näher erläutert.

Wie aus der Zeichnung hervorgeht, sind in einem Kraftfahrzeug an exponierter Stelle mehrere, z.B. zur Innenraumbeleuchtung gehörende, d.h. als Leuchten ausgebildete elektrische Verbraucher V angeordnet, wovon exemplarisch zwei Verbraucher V1,V2 dargestellt sind. Diese Verbraucher sind mit ihrem einen Anschluß direkt an dem einen (positiven) Pol (+) der Gleichspannungsversorgung angeschlossen, wobei dieser Pol über eine sämtlichen Verbrauchern zugeordnete gemeinsame Verbindungsleitung zugeführt werden kann. Der andere Anschluß eines jeden Verbrauchers ist über jeweils eine tastend zu betätigende und zwar als sogenannter Öffner fungierende verbrauchernahe Schaltvorrichtung Sn1,Sn2 und über jeweils eine zugehörige Verbindungsleitung L1,L2 mit der an zentraler Stelle im Kraftfahrzeug - wie. z.B. in der sogenannte Zentralelektrik - angeordneten Elektronikeinheit E verbunden. Diese Elektronikeinheit weist im wesentlichen eine Leistungsstufe LS auf, die mit jeweils einem für jeden Verbraucher vorgesehenen Leistungstreiber versehen ist und die einer ebenfalls der Elektronikeinheit zugehörigen, aus einem Mikrocomputer µC bestehenden Steuerstufe St zugeordnet ist. Diese als integrierter Schaltkreis ausgeführte, einerseits an dem positiven Pol (+) und andererseits an dem auf Masse GND liegenden negativen Pol (-) angeschlossene Leistungsstufe LS ist mit ihren beiden Leistungsausgängen OUT1,2 mit den beiden Verbrauchern V1,V2 über die beiden Verbindungsleitungen L1,L2 und die zugehörigen verbrauchernahen Schaltvorrichtungen Sn1,Sn2 verbunden.

Von den sogenannten Diagnoseausgängen Diag1,2 der Leistungsstufe LS, besteht über jeweils eine Verbindungsleitung V1,V2 jeweils eine elektrische Verbindung zu den Überwachungseingängen D1,D2 der Steuerstufe St, die gleichzeitig auch die Steuereingänge E1,E2 derselben darstellen. Schließlich sind an die Steuerausgänge A1,A2 der Steuerstufe St die zugehörigen Eingänge In1,2 der Leistungsstufe angeschlossen.
Damit ist folgender Funktionsablauf möglich.
Bei einer tastend erfolgenden Betätigung einer Schaltvorrichtung Sn wird über die Leistungsstufe LS und die zugehörige elektrische Verbindung VE1,VE2 von der Steuerstufe infolge entsprechender Beaufschlagung des zugehörigen Überwachungseingangs D1,D2 eine Stromkreisunterbrechung diagnostiziert und aufgrund der Kürze der Unterbrechung eine Umschaltung des zugehörigen Leistungstreibers vorgenommen.
Bei einer längeren Unterbrechung - wie z.B. durch Leitungsbruch wird dies entsprechend der zeitlichen Dauer ebenfalls zweckentsprechend erkannt, so daß keine Reaktion bzw. eine Ausschaltung des Leistungstreibers über die Steuerstufe erfolgt.

Natürlich kann eine solche Vorgehensweise auch mit einer parallel zum Verbraucher liegenden, als sogenannter Schließer ausgebildeten Schaltvorrichtung realisiert werden. Dabei fließt dann im Moment des Schaltens der volle Kurzschlußstrom über den Schaltkreis, welcher ebenfalls zu diagnostizieren ist.

Um die Verbraucher auch verbraucherfern ansteuern zu können, sind an die Steuerstufe über die Eingänge E3 noch mehrere verbraucherterne Steuervorrichtungen Sf angeschlossen, die zumindest teilweise auf engstem Raum - z.B. in einer Fernbedienung - zusammengefaßt sein können und aus direkt oder indirekt zu betätigenden Schaltvorrichtungen bestehen können.

## Patentansprüche

1. Elektrische Schaltungsanordnung für mehrere vorzugsweise an der Karosserie eines Kraftfahrzeugs vorhandene, mit jeweils ihrem einen Anschluß direkt mit dem einen Pol (+) einer Gleichspannungs-Versorgung verbundene Verbraucher (V1,V2), denen jeweils eine verbrauchernahe Schaltvorrichtung (Sn1,Sn2) zugeordnet ist und deren jeweils anderer Anschluß mit einer entfernt liegenden Elektronikeinheit (E) verbunden ist, welche mit einer den Verbrauchern zugeordneten, mehrere jeweils einen Verbraucher ein- und ausschaltende Leistungstreiber aufweisenden elektronische Leistungsstufe (LS) und einer dieselben beeinflussenden, die einzelnen den Verbrauchern zugehörigen Stromkreise hinsichtlich ihrer Funktionsfähigkeit überwachenden elektronischen Steuerstufe (St) versehen ist, wobei jeder Verbraucher zusammen mit seiner verbrauchernahen Schaltvorrichtung lediglich über eine elektrische Verbindungsleitung (L1,L2) an der Elektronikeinheit angeschlossen ist und eine Schaltzustandsänderung einer Schaltvorrichtung von der Steuerstufe über ihren mit der Leistungsstufe verbundenen Überwachungseingang (D1,D2) erfaßt und über ihren ebenfalls mit der Leistungsstufe verbundenen Steuerausgang (A1,A2) zur Umschaltung des zugehörigen Leistungstreibers herangezogen ist.

2. Elektrische Schaltungsanordnung nach Anspruch 1, dadurch gekennzeichnet, daß die elektronische Steuerstufe (St) aus einem Mikrocomputer (µC) besteht.

3. Elektrische Schaltungsanordnung nach einem der Ansprüche 1 oder 2, dadurch gekennzeichnet, daß der elektronischen Steuerstufe (St) zur Beeinflussung von jeweils einem Verbraucher (V1,V2) noch jeweils zumindest eine verbraucherferne Steuervorrichtung (Sf) zugeordnet ist.

4. Elektrische Schaltungsanordnung nach Anspruch 3, dadurch gekennzeichnet, daß zumindest ein Teil der den Verbrauchern (V) zugeordneten verbraucherfernen Steuervorrichtungen (Sf) auf engstem Raum zusammengefaßt ist.

5. Elektrische Schaltungsanordnung nach Anspruch 4, dadurch gekennzeichnet, daß die Steuervorrichtungen (St) einer Fernbedienungseinheit zugehörig sind.

6. Elektrische Schaltungsanordnung nach einem der Ansprüche 3 bis 5, dadurch gekennzeichnet, daß die Steuervorrichtungen (Sf) aus direkt oder indirekt zu betätigenden Schaltvorrichtungen bestehen.

7. Elektrische Schaltungsanordnung nach einem der Ansprüche 1 bis 6, dadurch gekennzeichnet, daß die verbrauchernahen Schaltvorrichtungen (Sn1;Sn2) in Reihe zu den zugeordneten Verbrauchern (V1,V2) liegen.

8. Elektrische Schaltungsanordnung nach Anspruch 7, dadurch gekennzeichnet, daß die verbrauchernahen Schaltvorrichtungen (Sn1,Sn2) in die zwischen jedem Verbraucher (V1,V2) und der Elektronikeinheit (E) vorhandene Verbindungsleitung (L1,L2) eingefügt sind.

9. Elektrische Schaltungsanordnung nach einem der Ansprüche 7 oder 8, dadurch gekennzeichnet, daß die verbrauchernahen Schaltvorrichtungen (Sn1,Sn2) als tastend zu betätigende Öffner ausgebildet sind.

10. Elektrische Schaltungsanordnung nach einem der vorhergehenden Ansprüche, dadurch gekennzeichnet, daß die verbrauchernahen Schaltvorrichtungen (Sn) als parallel zu den Verbrauchern (V) liegende, tastend zu betätigende Schließer ausgebildet sind.
